# EUROPÄISCHE PATENTANMELDUNG

(11) **EP 4 474 499 A1**
(43) Veröffentlichungstag der Anmeldung: **11.12.2024**
(21) Anmeldenummer: 23178439.8
(22) Anmeldetag: 09.06.2023
(51) Int. Cl.: C22B 3/08, B01D 61/42, C01D 15/02, C01D 15/08, C22B 3/44, C22B 7/00, C22B 3/00, C22B 26/12

(54) **VERFAHREN ZUR TRENNUNG VON LI- UND NA-IONEN**

(71) Anmelder: H.C. Starck Tungsten GmbH, 80335 München (DE)
(72) Erfinder: Meese-Marktscheffel, Juliane, 38642 Goslar (DE); Olbrich, Armin, 38642 Goslar (DE); Egeberg, Alexander, 38642 Goslar (DE); Zeugner, Alexander, 38642 Goslar (DE); Wolff, Alexander, 38642 Goslar (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Trennung von Li- und Na-Ionen aus sulfathaltigen Lösungen sowie eine Vorrichtung zur Durchführung des Verfahrens.

## Beschreibung

Die vorliegende Erfindung betrifft ein Verfahren zur Trennung von Li- und Na-Ionen aus sulfathaltigen Lösungen sowie eine Vorrichtung zur Durchführung des Verfahrens.

Fahrzeugen mit elektrischem Antrieb, die mit Strom aus emissionsarmen Quellen angetrieben werden, wird über ihren gesamten Lebenszyklus gesehen das größte Klimaschutzpotential landgebundener Transporttechnologien zugeschrieben. Entsprechend gilt die Elektromobilität als zentraler Baustein eines nachhaltigen und klimaschonenden Verkehrssystems auf Basis erneuerbarer Energien. Als Basis des elektrischen Antriebs liegt der Fokus auf Lithium-Ionen/Polymer-Batterien als vielversprechendes Speichersystem, die allerdings nur über eine begrenzte Lebenszeit verfügen. Insofern ist das angestrebte Ausmaß der Elektrifizierung nur in Verbindung mit einem nachhaltigen Recyclingkonzept erreichbar. Insbesondere das geplante Verkaufsverbot von Neuwagen mit Verbrennungsmotor macht eine ganzheitliche Wiedergewinnung der in den gebrauchten Batterien enthaltenen Wertmetalle wie Cobalt, Nickel und Mangan, aber auch des nur über langwierige Prozesse erhältlichen Lithiums, unabdingbar.

Der Stand der Technik beschreibt eine Reihe von Verfahren, die sich mit der Rückgewinnung der Wertmetalle aus verbrauchten Lithium-Ionen/Polymer-Batterien befassen.

US 2017/0077564 betrifft ein Verfahren zum Recycling von Lithium-Ionen-Batterien, umfassend: (i) Identifizieren eines molaren Verhältnisses für Kathodenmaterialien für eine neue Batterie; (ii) Bilden einer Auslauglösung durch Kombinieren von zerkleinertem Batteriematerial aus einem Lithiumbatterie-Recyclingstrom mit einem sauren Auslaugmittel und Wasserstoffperoxid (H₂O₂), um Kathodenmaterialien von ungelösten Materialien zu trennen; (iii) Filtrieren der ungelösten Materialien aus der gebildeten Laugenlösung, so dass die gelösten Salze der Kathodenmaterialien in der Laugenlösung verbleiben; (iv) Bestimmen einer Zusammensetzung der Laugenlösung durch Identifizieren eines molaren Verhältnisses der darin gelösten Salze des Kathodenmaterials; (v) Zugabe von Ni-, Co-, Mn- oder Al-Salzen in Sulfat-(xSO₄) auf der Grundlage der ermittelten Zusammensetzung, um das Molverhältnis der gelösten Kathodenmaterialsalze in der Laugenlösung so einzustellen, dass es dem identifizierten Molverhältnis für die recycelte Batterie entspricht, einschließlich der Zugabe einer Lösung von Aluminiumsulfaten und eines Chelatbildners; und (iv) Erhöhen des pH-Wertes der Auslaugungslösung auf mindestens 10, um Metallionen der Kathodenmaterialien auszufällen und zu filtern, um einen Präkursor pCAM für das eigentliche Kathodenaktivmaterial CAM zu bilden, in dem die in der Lösung verbliebenen Ni-, Co-, Mn- und Al-Salze als kombiniertes Hydroxid (OH)₂ oder Carbonat (CO₃) mit einem Molverhältnis wie es für das neue CAM gewünscht wird, vorliegen. Der Präkursor wird anschließend mit LiOH^{∗}H₂O oder Li₂CO₃ intensiv vermischt und bei Temperaturen >800°C zum Kathodenaktivmaterial umgesetzt.

US 2013/0302226 offenbart ein Verfahren zum Recyceln von Batterien, in dem eine Lösung von aggregierten Batteriematerialien aus verbrauchten Zellen erzeugt wird, Verunreinigungen aus der erzeugten Lösung ausgefällt werden, in der Lösung ein vorbestimmtes Verhältnis von gewünschten Materialien eingestellt wird und das gewünschte Material ausgefällt und zu Kathodenmaterial für neue Batterien weiterverarbeitet wird.

Die im Stand der Technik beschriebenen Verfahren weisen allerdings den Nachteil auf, dass, bedingt durch die Verfahrensführung, das wiederzugewinnende Lithium als Li₂SO₄ in einer Lösung zusammen mit Na₂SO₄ vorliegt, so dass es erst gegen Ende der Prozesskette als schwerlösliches Li₂CO₃ wiedergewonnen werden kann. Aufgrund der Löslichkeitsverhältnisse von Li₂CO₃ und Na₂CO₃ sowie Na₂SO₄ und Li₂SO₄ ist eine Trennung von Na- und Li-Ionen im Detail sehr aufwendig und macht eine tatsächliche quantitative Rückgewinnung des Lithiums unter wirtschaftlichen Aspekten praktisch unmöglich.

Um eine nachhaltige und vollwertige Aufarbeitung verbrauchter Lithium-Ionen/Polymer-Batterien zu erreichen, besteht somit weiterhin Bedarf nach einem Verfahren, das eine verbesserte Rückgewinnung des Lithiums aus Na-haltigen Sulfatlösungen ermöglicht. Es ist somit Aufgabe der vorliegenden Erfindung diesem Bedarf zu begegnen.

Im Rahmen der vorliegenden Erfindung wurde überraschend gefunden, dass die schlechte Trennbarkeit von Li- und Na-Ionen aus sulfathaltigen Lösungen durch eine Überführung in die entsprechenden Hydroxide umgangen werden kann.

Daher ist ein erster Gegenstand der vorliegenden Erfindung ein Verfahren zur Trennung von Na- und Li-Ionen, in dem eine wässrige Lösung A, die Na₂SO₄ und Li₂SO₄ umfasst, einer Elektrolyse unterzogen wird, um eine Lösung B zu erhalten und die erhaltene Lösung B mit einer Carbonat-Quelle unter Bildung von Li₂CO₃ behandelt wird.

Dem Fachmann ist bewusst, dass die Verbindungen Na₂SO₄, Li₂SO₄, Na₂CO₃, Li₂CO₃ sowie alle weiteren Salze in Lösung in Form ihrer Ionen vorliegen. Sie werden daher, sofern nicht anders bezeichnet, als Synonym für die entsprechenden Ionen verwendet und auf deren explizite Nennung wird verzichtet.

Es wurde überraschend gefunden, dass die größeren Löslichkeitsunterschiede von Li₂CO₃ und Na₂CO₃ gegenüber den Löslichkeiten von Na₂SO₄ und Li₂SO₄ vorteilhaft genutzt werden können, um eine effektivere Trennung zu erreichen. Während die Löslichkeiten von Na₂SO₄ und Li₂SO₄ nur etwa um den Faktor 2 auseinander liegen, ist Li₂CO₃ deutlich schwerer löslich als Na₂CO₃, was eine effektivere Trennung der beiden Metalle erlaubt.

Als Carbonat-Quelle können im Rahmen des erfindungsgemäßen Verfahrens eine Reihe von Verbindungen eingesetzt werden. Vorzugsweise ist die Carbonat-Quelle ausgewählt aus der Gruppe bestehend aus Na₂CO₃, CO₂, NaHCO₃, (NH₄)₂CO₃, (NH₄)HCO₃ und Mischungen hiervon. Als besonders vorteilhaft und damit bevorzugt hat sich die Verwendung von CO₂ als Carbonat-Quelle erwiesen. Dieses kann beispielsweise aus Abgasen anderer Verfahren gewonnen und so einer nachhaltigen Nutzung zugeführt werden, wodurch sich der CO₂-Ausstoß verringern lässt.

Das erfindungsgemäße Verfahren sieht vor, eine Lösung der Sulfatsalze des Na und Li einer Elektrolyse zu unterziehen, wobei davon ausgegangen wird, dass auf diese Weise die Sulfatsalze in die entsprechenden Hydroxide überführt werden, die sich vorteilhafter trennen lassen. In dieser Hinsicht ist eine Membranelektrolyse bevorzugt, insbesondere ein Elektrodialyse und ganz besonders eine Elektrodialyse mit bipolaren Membranen. Besonders bevorzugt ist eine Mehrkammerelektrolyse mit Kationenaustauschermembran und Anionenaustauschermembran.

Im Rahmen des erfindungsgemäßen Verfahrens wird das Lithium als Li₂CO₃ zurückgewonnen, welches in einem weiteren Schritt als Feststoff der Lösung entzogen werden kann. Vorzugsweise wird das Li₂CO₃ mit wenigstens einer Methode abgetrennt, die ausgewählt ist aus der Gruppe bestehend aus Sedimentation, Filtration und Zentrifugieren. Die Abtrennung kann einen kurzen Waschprozess beinhalten, wobei die Waschlaugen an geeigneten Stellen in den Gesamtprozess zurückgeführt werden können.

Das erfindungsgemäße Verfahren erlaubt eine effektive Trennung von Na und Li. Sollte der Reinheitsgrad des gewonnenen Li₂CO₃ als nicht ausreichend empfunden werden, kann das Li₂CO₃ weiteren Reinigungsschritten unterworfen werden. In einer bevorzugten Ausführungsform wird das erhaltene Li₂CO₃ in einem weiteren Schritt durch Behandlung mit CO₂ in lösliches LiHCO₃ überführt. Durch Erwärmen der LiHCO₃ enthaltenden Lösung lässt sich aus dieser Lösung hochreines Li₂CO₃ erhalten. Daher ist eine Ausführungsform bevorzugt, in der die LiHCO₃ enthaltende Lösung unter Bildung von Li₂CO₃ erwärmt wird. Dieser Reinigungsschritt bietet den Vorteil, dass die bei der Abtrennung des Li₂CO₃ erhaltene Mutterlauge sowie das bei der Bildung des Li₂CO₃ erhaltene, aus der Reaktionsmischung ausgetriebene, CO₂ dem Prozess wieder zugeführt werden können, so dass ein nachhaltiger Kreislauf entsteht.

Die Ausgangslösung A des erfindungsgemäßen Verfahrens kann durch eine Reihe von Verfahren anfallen, wie sie in Recyclingprozessen angewendet werden. Die sulfathaltige wässrige Lösung A wird vorzugsweise durch Behandlung einer Lösung X gewonnen, wobei die Lösung X Li₂SO₄ und mindestens eine Verbindung MSO₄ umfasst, wobei M ein Übergangsmetall ist, vorzugsweise ausgewählt aus der Gruppe bestehend aus Ni, Co, Mn, Al sowie Mischungen hiervon. Diese Behandlung kann beispielsweise mittels NaOH und optional weiterer Zugabe von H₂SO₄ erfolgen. Es wird davon ausgegangen, dass durch Behandlung der Lösung X mit NaOH das Metall M unter Entstehung von Na₂SO₄ als Nebenprodukt in sein Hydroxid überführt wird. Alternativ kann das Metall in Gegenwart eines organischen Extraktionsmittels zunächst über Reaktivextraktion in die organische Phase überführt und anschließend mit Schwefelsäure von der organischen Phase als MSO₄ zurück in die wässrige Phase extrahiert werden und so dem weiteren Wertschöpfungskreislauf wieder zugeführt werden.

Lösung X wird im Rahmen des erfindungsgemäßen Verfahrens vorzugsweise dadurch gewonnen, dass eine Suspension Y, die mindestens eine Verbindung LiMO₂ umfasst, mit H₂SO₄ und einem Reduktionsmittel behandelt wird, wobei M ein Übergangsmetall ist, vorzugsweise eines ausgewählt aus der Gruppe bestehend aus Ni, Co, Mn, Al und Mischungen hiervon. Das Reduktionsmittel ist vorzugsweise ausgewählt aus der Gruppe bestehend aus H₂O₂ und SO₂.

Das erfindungsgemäße Verfahren zielt insbesondere auf die Wiedergewinnung von Li aus Lithium-Ionen/Polymer-Batterien ab. Daher ist eine Ausführungsform bevorzugt, in der die LiMO₂ umfassende Suspension aus gebrauchten Lithium-Ionen-Batterien und/oder Produktionsabfällen bei deren Herstellung gewonnen wird. Auf diese Weise wird durch das erfindungsgemäße Verfahren ein umfassender Recyclingkreislauf bereitgestellt, der eine effiziente Wiedergewinnung des in Lithium-Ionen/Polymer-Batterien verbauten Lithiums erlaubt und so einen wertvollen Beitrag zum Erfolg des angestrebten Konzepts der Elektromobilität leistet.

Im Rahmen des umfassenden Recyclingansatzes kann das bei der Behandlung der Lösung X anfallende Übergangsmetall-Hydroxid ebenfalls weiter aufgearbeitet werden, beispielsweise zur weiteren Verwendung als Kathodenaktivmaterial in neuen Batterien. In einer bevorzugten Ausführungsform des erfindungsgemäßen Verfahrens wird daher die Behandlung der Lösung X derart ausgeführt, dass weiterhin ein Übergangsmetall-Mischhydroxid NiₓCo_{y}Mn_{z}(OH)₂ durch Einstellen der Übergangsmetallstöchiometrie und Fällung mit NaOH gewonnen wird. Das Einstellen der Stöchiometrie kann dabei beispielsweise durch gezielte Abtrennung oder gezieltes Hinzufügen eines oder mehrerer der Bestandteile des Übergangsmetall-Mischhydroxids erfolgen. Auf diese Weise kann bereits im Übergangsmetall-Mischhydroxid das im späteren Kathodenmaterial gewünschte Verhältnis von Ni:Co:Mn eingestellt werden. Im Rahmen des derzeitigen Umschwungs auf nickelangereicherte Kathodenaktivmaterialien ist das Einstellen der Stöchiometrie durch gezieltes Abtrennen einer oder mehrerer der Bestandteile des Übergangsmetall-Mischhydroxids bevorzugt. In einer bevorzugten Ausführungsform beträgt das Verhältnis im Übergangsmetall-Mischhydroxid Ni:Co:Mn 1:1:1, alternativ bevorzugt 8:1:1.

Neben der Wiedergewinnung der eingesetzten Materialien, insbesondere der Wertmetalle, ist ein weiterer Aspekt einer nachhaltigen Recyclingstrategie der umweltschonende Umgang mit Ressourcen. Dies bedeutet unter anderem, dass, sofern möglich, für den Recyclingprozess benötigte Chemikalien ebenfalls wiedergewonnen beziehungsweise im Kreislaufsystem geführt werden. Im vorliegenden Verfahren betrifft dies insbesondere die zum Erhalt der Lösung X benötigte Schwefelsäure. Daher ist eine Ausführungsform des erfindungsgemäßen Verfahrens bevorzugt, in der die bei der Elektrolyse anfallende Schwefelsäure wenigstens teilweise zur Herstellung der Lösung X verwendet wird.

Ein weiterer Gegenstand der vorliegenden Erfindung ist eine Vorrichtung zur Durchführung des erfindungsgemäßen Verfahrens. Die Vorrichtung umfasst wenigstens eine Elektrolyseeinheit mit mindestens einem Zulauf zum Einbringen der Lösung A und mindestens einem Ablauf zur Abführung der Lösung B.

Die vorliegende Erfindung wird anhand der folgenden Beispiele und Figuren näher erläutert, wobei diese keinesfalls als Einschränkung des Erfindungsgedanken zu verstehen sind.

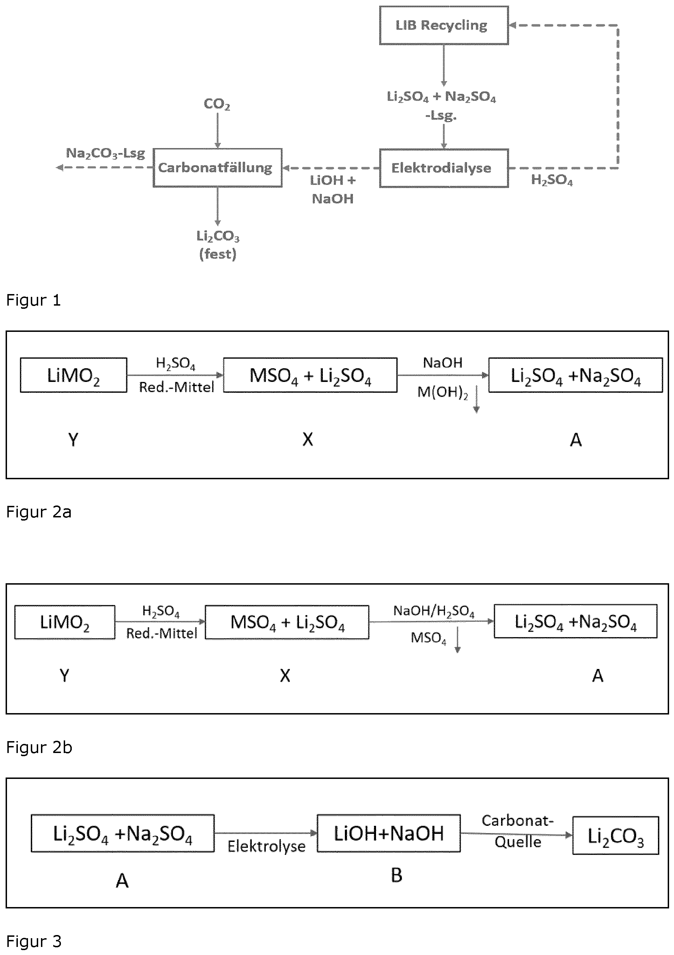

Figur 1 zeigt schematisch das Konzept des erfindungsgemäßen Verfahrens, gemäß dem eine im Rahmen des Recyclings von Lithium-Ionen/Polymer-Batterien anfallende Lösung A enthaltend Li₂SO₄ und Na₂SO₄ einer Elektrolyse unterzogen wird, wodurch die Sulfate in die entsprechenden Hydroxide überführt und das Li durch Behandlung mit CO₂ als Carbonat-Quelle als Li₂CO₃ abgetrennt wird, während Na₂CO₃ in Lösung verbleibt.

Figur 2a zeigt schematisch den Erhalt der Lösung A ausgehend von einer im Rahmen der Aufarbeitung von Lithium-Ionen/Polymer-Batterien anfallenden Suspension Y, die Li in Form eines Lithium-Übergangsmetalloxids LiMO₂ enthält. Das Lithium-Übergangsmetalloxid wird durch Behandlung mit H₂SO₄ und einem Reduktionsmittel, vorzugsweise H₂O₂ oder SO₂, in Li₂SO₄ und das entsprechende Übergangsmetallsulfat MSO₄ überführt (Lösung X). Durch Behandlung der Lösung X mit NaOH kann das Übergangsmetallsulfat in das entsprechende Hydroxid M(OH)₂ überführt und abgetrennt werden, wodurch eine Lösung erhalten wird, die Na₂SO₄ und Li₂SO₄ enthält, die als Ausgangslösung A für das erfindungsgemäße Verfahren dient.

Gemäß dem in Figur 2b gezeigten Schema kann Lösung X weiterhin mit H₂SO₄ behandelt werden, um das Übergangsmetall in Form seines Sulfats zu erhalten.

Figur 3 zeigt den schematischen Ablauf des erfindungsgemäßen Verfahrens, bei den eine Lösung A aus Li₂SO₄ und Na₂SO₄ einer Elektrolyse unterzogen wird, um Lösung B zu erhalten, aus der dann durch Behandlung mit einer Carbonatquelle Li₂CO₃ abgetrennt werden kann. Auf diese Weise lässt sich eine effektive Trennung der beiden Ionen erreichen.

## Patentansprüche

1. Verfahren zur Trennung von Na- und Li-Ionen, **dadurch gekennzeichnet, dass** eine wässrige Lösung A, umfassend Na₂SO₄ und Li₂SO₄, einer Elektrolyse unterzogen wird, um eine Lösung B zu erhalten und die erhaltene Lösung B mit einer Carbonat-Quelle unter Bildung von Li₂CO₃ behandelt wird.

2. Verfahren gemäß Anspruch 1, **dadurch gekennzeichnet, dass** die Carbonat-Quelle ausgewählt ist aus der Gruppe bestehend aus Na₂CO₃, CO₂, NaHCO₃, (NH₄)₂CO₃, (NH₄)HCO₃ und Mischungen hiervon.

3. Verfahren gemäß wenigstens einem der vorangehenden Ansprüche, **dadurch gekennzeichnet, dass** es sich bei der Elektrolyse um eine Mehrkammermembranelektrolyse mit Kationenaustauschermembran und Anionenaustauschermembran handelt, insbesondere um eine Elektrodialyse, vorzugsweise eine Elektrodialyse mit bipolaren Membranen, handelt.

4. Verfahren gemäß wenigstens einem der vorangehenden Ansprüche, **dadurch gekennzeichnet, dass** das gebildete Li₂CO₃ mittels wenigstens einer Methode abgetrennt wird, die ausgewählt ist aus der Gruppe bestehend aus Sedimentation, Filtration und Zentrifugieren.

5. Verfahren gemäß wenigstens einem der vorangehenden Ansprüche, **dadurch gekennzeichnet, dass** das erhaltene Li₂CO₃ in einem weiteren Schritt durch Behandlung mit CO₂ in lösliches LiHCO₃ überführt wird.

6. Verfahren gemäß wenigstens einem der vorangehenden Ansprüche, **dadurch gekennzeichnet, dass** die wässrige Lösung A durch Behandeln einer Lösung X gewonnen wird, wobei die Lösung X Li₂SO₄ und mindestens eine Verbindung MSO₄ umfasst, wobei M ein Übergangsmetall ist, vorzugsweise aus der Gruppe ausgewählt bestehend aus Ni, Co, Mn, Al sowie Mischungen hiervon.

7. Verfahren gemäß Anspruch 6, **dadurch gekennzeichnet**, Lösung X dadurch gewonnen wird, dass eine Suspension Y, die mindestens eine Verbindung LiMO₂ umfasst, mit H₂SO₄ und einem Reduktionsmittel behandelt wird, wobei M ein Übergangsmetall ist, vorzugsweise eines ausgewählt aus der Gruppe bestehend aus Ni, Co, Mn, Al und Mischungen hiervon.

8. Verfahren gemäß Anspruch 7, **dadurch gekennzeichnet, dass** die LiMO₂ umfassende Verbindung aus gebrauchten Lithiumionen/Polymerbatterien und/oder Produktionsabfällen bei deren Herstellung gewonnen wird.

9. Verfahren gemäß wenigstens einem der Ansprüche 6 bis 8, **dadurch gekennzeichnet, dass** bei dem Behandeln der Lösung X weiterhin ein Übergangsmetall-Mischhydroxid NiₓMn_{y}Co_{z}(OH)₂ durch Einstellen der Übergangsmetallstöchiometrie und Fällung mit Natronlauge gewonnen wird.

10. Verfahren gemäß Anspruch 9, **dadurch gekennzeichnet, dass** das Einstellen der Übergangsmetallstöchiometrie durch gezieltes Abtrennen oder hinzufügen einer oder mehrerer der Bestandteile des Übergangsmetall-Mischhydroxids erfolgt.

11. Verfahren gemäß wenigstens einem der vorangehenden Ansprüche, **dadurch gekennzeichnet, dass** die bei der Elektrolyse entstehende Schwefelsäure wenigstens teilweise zur Herstellung der Lösung X verwendet wird.

12. Vorrichtung zur Durchführung eines Verfahrens gemäß wenigstens einem der vorangehenden Ansprüche, umfassend eine Elektrolyseeinheit mit mindestens einem Zulauf zum Einbringen der Lösung A und mindestens einem Ablauf zur Abführung der Lösung B.
